# EUROPEAN PATENT APPLICATION

(11) **EP 4 618 081 A1**
(43) Date of publication of application: **17.09.2025**
(21) Application number: 23896091.8
(22) Date of filing: 31.07.2023
(51) Int. Cl.: G11B 5/008

(54) **MAGNETIC-TAPE STORAGE DEVICE, COMPUTING SYSTEM, AND METHOD FOR MAGNETIC-TAPE STORAGE DEVICE**

(30) Priority: 30.11.2022 CN 202211521479; 13.02.2023 CN 202310155810
(71) Applicant: Huawei Technologies Co., Ltd., Shenzhen, Guangdong 518129 (CN)
(72) Inventor: PU, Guiyou, Shenzhen, Guangdong 518129 (CN)
(74) Representative: Isarpatent
(86) International application number: PCT/CN2023/110380
(87) International publication number: WO 2024/113928

(57) **Abstract**

A tape storage apparatus, a computing system, and a method for a tape storage apparatus are provided. The tape storage apparatus includes: a plurality of tape assemblies, arranged in a first direction, where each of the plurality of tape assemblies includes a first reel, a second reel, and a tape rolled between the first reel and the second reel, the first reel and the second reel are opposite to each other in a second direction, and the second direction intersects the first direction; a driving component, coupled to the plurality of tape assemblies and suitable for driving the tapes of the plurality of tape assemblies to roll; and a magnetic head component, suitable for performing reading and writing on the tapes of the plurality of tape assemblies. Therefore, addressing duration of the tape storage apparatus can be greatly reduced and random access performance of the tape storage apparatus can be improved, so that the tape storage apparatus is applicable to more application scenarios.

## Description

### TECHNICAL FIELD

This disclosure mainly relates to the field of storage technologies, and more specifically, to a tape storage apparatus, a computing system including the tape storage apparatus, and a method for the tape storage apparatus.

### BACKGROUND

A tape storage device or a tape memory may implement data storage through a tape. As a nonvolatile storage medium, a tape is formed by a strip with a magnetizable covering material, and is usually packaged in a winding manner. The tape storage device is characterized by a large storage capacity, low costs, and low energy consumption.

However, tape storage has some disadvantages in timeliness performance. For example, the tape storage device or the tape memory needs to spend a long time in addressing in a data read or write process. Such a delay or wait in time limits an application scope of the tape storage.

### SUMMARY

To resolve the foregoing problems, this disclosure provides an improved tape storage apparatus, a computing system including the tape storage apparatus, and a method for the tape storage apparatus.

According to a first aspect, a tape storage apparatus is provided, where the tape storage apparatus includes: a plurality of tape assemblies, arranged in a first direction, where each of the plurality of tape assemblies includes a first reel, a second reel, and a tape rolled between the first reel and the second reel, the first reel and the second reel are opposite to each other in a second direction, and the second direction intersects the first direction; a driving component, coupled to the plurality of tape assemblies and suitable for driving the tapes of the plurality of tape assemblies to roll; and a magnetic head component, suitable for performing reading and writing on the tapes of the plurality of tape assemblies.

In the solution of this disclosure, the plurality of tape assemblies are arranged in the first direction intersecting a rolling direction of a tape or a length direction of a tape, so that a length of a tape of a single tape assembly can be shortened when a storage density and a storage capacity remain unchanged or change slightly. In this way, addressing duration is reduced and access performance is improved.

In some implementations of this disclosure, the tape storage apparatus further includes: a first actuating component, coupled to the magnetic head component and suitable for moving the magnetic head component back and forth in the first direction across the plurality of tape assemblies. In this implementation, an addressing capability in the first direction can be implemented by using the first actuating component, to shorten addressing duration of the tape storage apparatus, and avoid an increase in a quantity of magnetic heads, so as to reduce costs.

In some implementations of this disclosure, the first actuating component includes a first motor and a guide structure, and the first motor is suitable for driving the magnetic head component to move along the guide structure. In this implementation, the magnetic head component can be moved across the plurality of tape assemblies and accurately positioned near a tape of a target tape assembly.

In some implementations of this disclosure, the magnetic head component includes a magnetic head array, the magnetic head array is divided into a plurality of first subarrays respectively corresponding to the plurality of tape assemblies in a first direction, and each of the plurality of first subarrays includes one or more magnetic heads and is adjacent to a part of a tape that is of a corresponding tape assembly and that travels between the first reel and the second reel. In this implementation, the addressing capability in the first direction can be provided for the tape storage apparatus, to shorten the addressing duration of the tape storage apparatus.

In some implementations of this disclosure, the tape of each of the plurality of tape assemblies in at least one tape assembly includes a plurality of tape regions arranged in a third direction, the third direction is parallel to a width direction of the tape and intersects a plane on which the first direction and the second direction are located, and each of the plurality of tape regions extends in a length direction of the tape. In this implementation, more tape regions are arranged in the third direction for the tape of the at least one tape assembly, so that an area of the tape can be additionally increased in the width direction of the tape, which helps to further shorten a length of a single tape when the storage capacity remains unchanged. In this way, the addressing duration is further shortened.

In some implementations of this disclosure, each of the plurality of tape regions has a width greater than or equal to 12.65 mm. In this implementation, each tape of the tape storage apparatus can be multiplied in width relative to a standard tape. In this way, the length of the tape and the addressing duration can be further greatly shortened when the storage capacity remains unchanged.

In some implementations of this disclosure, the tape storage apparatus further includes: a second actuating component, coupled to the magnetic head component and suitable for moving the magnetic head component back and forth in the third direction across the plurality of tape regions. In this implementation, an addressing capability in the third direction can be provided for the tape storage apparatus, to shorten the addressing duration of the tape storage apparatus, and avoid the increase in the quantity of magnetic heads, so as to reduce the costs.

In some implementations of this disclosure, the second actuating component includes a second motor and a swing arm structure, and the swing arm structure is coupled between the second motor and the magnetic head component. In this implementation, the magnetic head component can be greatly moved in the third direction across the plurality of tape regions and accurately positioned near a target tape region.

In some implementations of this disclosure, the magnetic head component includes a magnetic head array, the magnetic head array is divided into a plurality of second subarrays respectively corresponding to the plurality of tape regions in the third direction, and each of the plurality of second subarrays includes one or more magnetic heads and is adjacent to a part of a tape that is of a corresponding tape region and that travels between the first reel and the second reel. In this implementation, the addressing capability in the third direction can be provided for the tape storage apparatus, to shorten the addressing duration of the tape storage apparatus.

In some implementations of this disclosure, the first direction, the second direction, and the third direction are perpendicular to each other. In this implementation, the area of the tape can be increased to a maximum extent in a plurality of directions perpendicular to the length direction of the tape, and higher space utilization can be obtained inside the storage apparatus, to ensure that the storage density and the storage capacity are large enough.

In some implementations of this disclosure, the magnetic head component is arranged opposite to the tapes of the plurality of tape assemblies in the second direction. In this implementation, it can be ensured that more tape assemblies are arranged in the first direction or the tape assemblies are arranged more closely, to obtain a larger storage capacity and a larger storage density.

In some implementations of this disclosure, the driving component includes one or more motors and is suitable for uniformly driving the tapes of the plurality of tape assemblies or independently driving tapes of some tape assemblies relative to tapes of the other tape assemblies. In this implementation, uniformly driving all tape assemblies may make a driving manner simpler and may multiply a linear addressing speed, and independent linear addressing may be implemented between different groups of tape assemblies in a manner of independently driving some tape assemblies. In this way, the linear addressing speed is improved, and better addressing and access performance is provided.

In some implementations of this disclosure, the tape storage apparatus is an apparatus integrating a tape and a magnetic head. In this implementation, for the apparatus integrating a magnetic head and a tape, no additional time needs to be spent to obtain the tape and assemble the tape and the magnetic head. Therefore, reduction of the addressing duration and improvement of an access capability can bring more obvious values and benefits to the tape storage apparatus. This may enable the tape storage apparatus to be applicable to some storage scenarios that have higher requirements on real-time performance of data.

According to a second aspect, a computing system is provided, including the tape storage apparatus according to the first aspect.

According to a third aspect, a method for a tape storage apparatus is provided, including: A driving component drives tapes of a plurality of tape assemblies to roll, where the plurality of tape assemblies are arranged in a first direction, a first reel and a second reel of each of the plurality of tape assemblies are opposite to each other in a second direction, and the second direction intersects the first direction; and a magnetic head component performs reading or writing on the tapes of the plurality of tape assemblies.

In some implementations of this disclosure, that the magnetic head component performs reading or writing on the tapes of the plurality of tape assemblies includes: A first actuating component moves the magnetic head component back and forth in the first direction across the plurality of tape assemblies; and positioning the magnetic head component on a tape of a target tape assembly and performing reading or writing on the tape of the target tape assembly.

In some implementations of this disclosure, that the magnetic head component performs reading or writing on the tapes of the plurality of tape assemblies includes: determining, from a plurality of first subarrays, a first subarray corresponding to the target tape assembly, where the magnetic head component includes a magnetic head array, and the magnetic head array is divided into the plurality of first subarrays respectively corresponding to the plurality of tape assemblies in the first direction; and the determined first subarray performs reading or writing on the tape of the target tape assembly.

In some implementations of this disclosure, that the magnetic head component performs reading or writing on the tapes of the plurality of tape assemblies includes: A second actuating component moves the magnetic head component back and forth in a third direction across a plurality of tape regions of a tape of at least one tape assembly, where the plurality of tape regions are arranged in the third direction, and the third direction is parallel to a width direction of the tape and intersects a plane on which the first direction and the second direction are located; and positioning the magnetic head component in a target tape region and performing reading or writing on the target tape region.

In some implementations of this disclosure, that the magnetic head component performs reading or writing on the tapes of the plurality of tape assemblies includes: determining, from a plurality of second subarrays, a second subarray corresponding to the target tape region, where the magnetic head component includes the magnetic head array, and the magnetic head array is divided into the plurality of second subarrays respectively corresponding to the plurality of tape regions in the third direction, and the third direction is parallel to the width direction of the tape and intersects the plane on which the first direction and the second direction are located; and the determined second subarray performs reading or writing on the target tape region.

In some implementations of this disclosure, that the driving component drives the tapes of the plurality of tape assemblies to roll includes: The driving component uniformly drives the tapes of the plurality of tape assemblies or independently drives tapes of some tape assemblies relative to tapes of the other tape assemblies.

The computing system according to the second aspect and the method according to the third aspect provided above include or relate to the tape storage apparatus according to the first aspect. Therefore, explanations or descriptions of the first aspect are also applicable to the second aspect and the third aspect. In addition, for beneficial effects that can be achieved in the second aspect and the third aspect, refer to beneficial effects of the first aspect. Details are not described herein again. In this application, the implementations provided in the foregoing aspects may be further combined to provide more implementations.

### BRIEF DESCRIPTION OF DRAWINGS

FIG. 1 is a diagram of a structure of a conventional tape storage apparatus;
FIG. 2 is a diagram of a structure of a tape storage apparatus according to an embodiment of this disclosure;
FIG. 3 is a partial diagram of a tape storage apparatus according to an embodiment of this disclosure;
FIG. 4 is a partial diagram of a tape storage apparatus according to another embodiment of this disclosure;
FIG. 5 is a diagram of a single tape of a tape storage apparatus according to an embodiment of this disclosure;
FIG. 6 is a partial diagram of a tape storage apparatus according to an embodiment of this disclosure;
FIG. 7 is a partial diagram of a tape storage apparatus according to another embodiment of this disclosure;
FIG. 8 is a block diagram of a computing system according to an embodiment of this disclosure;
FIG. 9 is a schematic flowchart of a method for a tape storage apparatus according to an embodiment of this disclosure; and
FIG. 10 to FIG. 13 are schematic flowcharts of a method for performing reading or writing on tapes of a plurality of tape assemblies according to some embodiments of this disclosure.

### DESCRIPTION OF EMBODIMENTS

Embodiments of this disclosure are described in more detail in the following with reference to the accompanying drawings. Although some embodiments of this disclosure are shown in the accompanying drawings, it should be understood that this disclosure can be implemented in various forms, and should not be construed as being limited to embodiments described herein, and instead, these embodiments are provided for a more thorough and complete understanding of this disclosure. It should be understood that the accompanying drawings and embodiments of this disclosure are merely used as examples, but are not intended to limit the protection scope of this disclosure.

In the descriptions of embodiments of this disclosure, the term "including" and similar terms thereof should be understood as open inclusion, that is, "include but is not limited to". The term "based on" should be understood as "at least partially based on". The term "one embodiment" or "this embodiment" should be understood as "at least one embodiment". The terms "first", "second", and the like may indicate different objects or a same object. Other explicit and implicit definitions may be further included below.

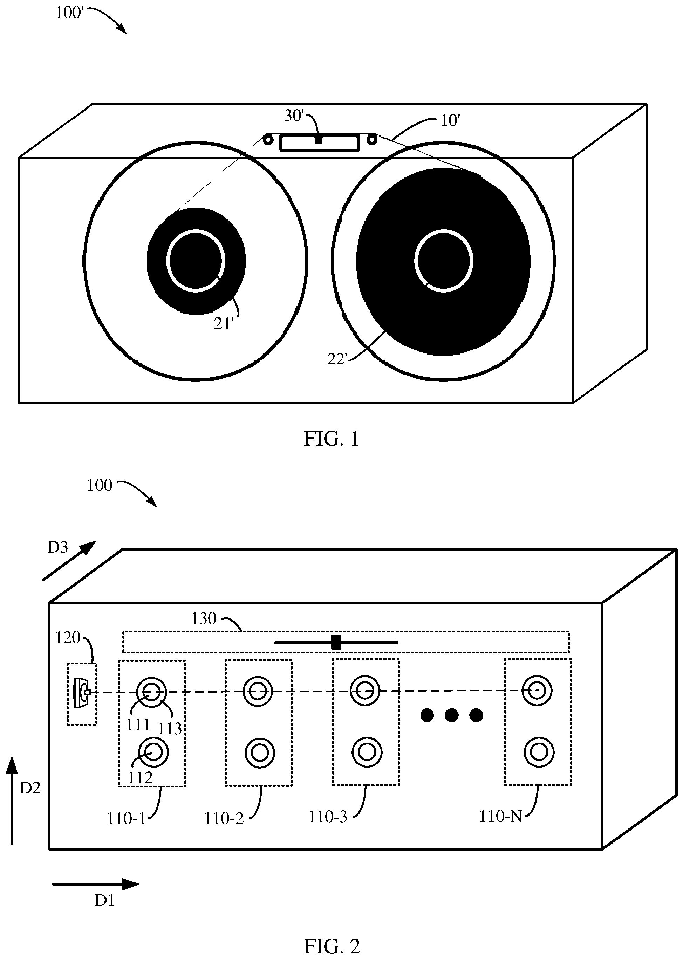

FIG. 1 is a diagram of a structure of a conventional tape storage apparatus 100'. As shown in FIG. 1, the tape storage apparatus 100' includes a tape 10', a reel 21', a reel 22', and a magnetic head 30'. The tape 10' is wound around one or two reels. When data in the tape 10' needs to be read or written, the tape 10' is rolled between the reel 21' and the another reel 22'. In a process in which the tape 10' rolls from the reel 21' to the reel 22' or from the reel 22' to the reel 21', a part of the tape 10' that is located between the two reels moves back and forth near the magnetic head 30'. In this way, the magnetic head 30' completes data reading or writing.

When reading or writing is performed on the tape 10', the tape storage apparatus 10' needs to perform an addressing operation, so that the magnetic head 30' can read file information or data from a region of the tape 10' or write file information or data into a region. The tape storage apparatus 10' generally performs an addressing operation in a linear addressing manner. In other words, the tape 10' is driven to continuously roll through rotation of the reel 21' and/or the reel 22', to enable the magnetic head 30' to be positioned in an expected region of the tape 10'.

However, since a tape mainly stores data by using a surface area of the tape, the tape is generally excessively long to obtain a larger storage capacity, which accordingly leads to a long time needed for addressing. For example, for a 100-meter tape, an average of 50-meter seek is needed to complete positioning or addressing on the tape. Therefore, when the seek is 1 meter per second, average addressing duration is as long as 50 seconds. The addressing duration is unacceptable for a scenario that has a high requirement on real-time performance of data. This limits an application scope of tape storage. As a result, currently, the tape storage is only applicable to a scenario that has a low requirement on latency, for example, archiving. In addition, if the addressing duration is reduced simply by shortening a length of the tape, a storage density and the storage capacity of the tape storage apparatus are greatly reduced due to the reduction of the length of the tape. This increases costs of the tape storage, and causes loss of a low-cost advantage of the tape storage.

Embodiments of this disclosure provide an improved tape storage solution. In the improved solution, the plurality of tape assemblies are arranged in directions different from a direction in which the reel 21' and the reel 22' are opposite to each other, so that a length of a tape of a single tape assembly can be shortened when the storage density and the storage capacity remain unchanged or change slightly. In this way, the addressing duration is reduced and an access speed of the tape is improved.

FIG. 2 is a diagram of a structure of a tape storage apparatus 100 according to an embodiment of this disclosure. The tape storage apparatus 100 uses a tape as a storage medium and may, for example, serve as a primary memory or a secondary memory of a computing system or a processing system. According to this embodiment of this disclosure, the tape storage apparatus 100 includes N tape assemblies 110-1, 110-2, 110-3, ..., and 110-N arranged in a first direction D1, where N is an integer greater than or equal to 2. Each of the N tape assemblies 110-1, 110-2, 110-3, ..., and 110-N includes a first reel 111, a second reel 112, and a tape 113 rolled between the first reel 111 and the second reel 112. The first reel 111 and the second reel 112 are opposite to each other in a second direction D2, and the second direction D2 intersects the first direction D1.

As an example, the N tape assemblies 110-1, 110-2, 110-3, ..., and 110-N may have a same tape size and a same reel size. Alternatively, only some of the tape assemblies may have the same tape size and the same reel size, or the tape sizes and the reel sizes of the N tape assemblies may be different from each other. In addition, as an example, the tape storage apparatus 100 may be in a shape of a cuboid as a whole. For example, the tape storage apparatus 100 has a cuboid-shaped housing, the first direction D1 may be a length direction of the cuboid, and the second direction D2 may be a height direction of the cuboid. However, it may be understood that the tape storage apparatus 100 as a whole or the housing of the tape storage apparatus 100 may be in another regular or irregular shape, or the tape storage apparatus 100 may have no housing. In addition, the first direction D1 in which the N tape assemblies are arranged and the second direction D2 in which the first reel 111 and the second reel 112 are opposite to each other may be any other directions that are not parallel in space. In other words, the first direction D1 and the second direction D2 may be perpendicular to each other or form an acute angle or an obtuse angle with each other, provided that the first direction D1 and the second direction D2 intersect with each other. Since the first direction D1 is a direction intersecting the second direction D2, a dimension in which the first direction D1 is located is different from a dimension in which a length direction of the tape or a rolling direction (namely, the second direction D2) of the tape is located. The plurality of tape assemblies are arranged in the first direction D1, so that a surface area of the tape can be increased in another dimension different from the length direction of the tape or the rolling direction of the tape. In this way, a length of a single tape can be shortened when a storage capacity remains unchanged. In addition, the tape storage apparatus 100 may have high space utilization in this manner, to ensure that a storage density of the tape storage apparatus 100 remains unchanged.

According to this embodiment of this disclosure, the tape storage apparatus 100 may include a driving component 120. The driving component 120 is coupled to the N tape assemblies 110-1, ..., and 110-N and is suitable for driving the tapes 113 of the N tape assemblies 110-1, ..., and 110-N to roll. As an example, the driving component 120 may drive at least one of the first reel 111 and the second reel 112 of each tape assembly to enable the tape 113 to roll between the two reels. In some embodiments, the driving component 120 may include one or more motors, and uniformly drive the tapes 113 of the N tape assemblies 110-1, ..., and 110-N. Specifically, one motor may be arranged on the driving component 120 or a motor set including a plurality of motors may be arranged on the driving component 120 to improve a driving force. The arranged motor or motor set may drive the tapes of all the tape assemblies 110-1, ..., and 110-N to rotate synchronously on respective reels of the tape assemblies 110-1, ..., and 110-N. In this way, N tapes can be simultaneously rolled in an addressing operation, to improve a linear addressing speed by N times. In some embodiments, the driving component 120 may independently drive tapes of some tape assemblies relative to tapes of the other tape assemblies. For example, the N tape assemblies may be grouped into a plurality of groups and independently driven by different motors or motor sets. In this manner, independent linear addressing can be implemented between different groups of tape assemblies as needed. In this way, the linear addressing speed is improved, and better addressing and access performance is provided.

According to this embodiment of this disclosure, the tape storage apparatus 100 may include a magnetic head component 130. The magnetic head component 130 is suitable for performing reading and writing on the tapes 113 of the N tape assemblies 110-1, ..., and 110-N. As an example, the magnetic head component 130 may be adjacent to a traveling path of the tape 113 between the first reel 111 and the second reel 112. In this way, the magnetic head component 130 may be aligned with a surface of the tape, to perform data writing or reading on the tape 113. In some embodiments, the magnetic head component 130 is arranged opposite to the tape 113 of the plurality of tape assemblies 110-1, ..., and 110-N in the second direction D2. In this manner, the magnetic head component 130 may be arranged on side surfaces of the plurality of tape assemblies 110-1, ..., and 110-N without occupying space between the tape assemblies 110-1, ..., and 110-N. In this way, more tape assemblies can be arranged in the first direction D1 or the tape assemblies 110-1, ..., and 110-N can be arranged more closely, to obtain a larger storage density and a larger storage capacity.

It can be learned that, the plurality of tape assemblies are arranged in the tape storage apparatus in an appropriate direction, and the driving component configured to drive these tape assemblies and the magnetic head component configured to read and write data are arranged, so that the addressing duration of the tape storage apparatus can be greatly reduced and the access performance of the tape storage apparatus can be improved when the storage capacity and the storage density are maintained. For example, 10 tape assemblies are arranged. If the 10 tape assemblies have tapes of a same length and are synchronously driven, in comparison to a conventional solution, an addressing speed of the tape storage apparatus 100 is actually improved by 10 times. When average addressing duration of the conventional solution is 50 seconds, the addressing duration can be shortened to 5 seconds.

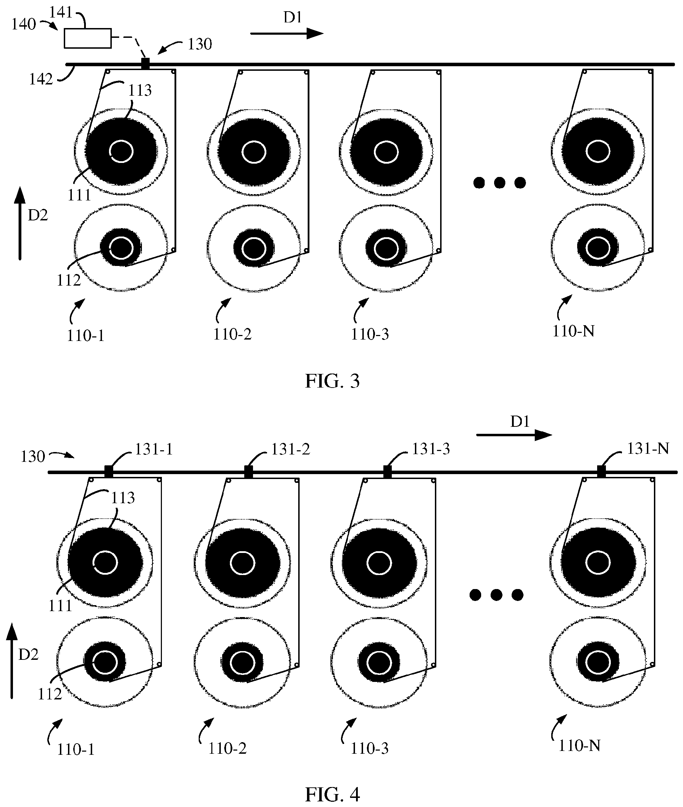

FIG. 3 is a partial diagram of a tape storage apparatus 100 according to an embodiment of this disclosure. As shown in FIG. 3, the tape storage apparatus 100 may further include a first actuating component 140. The first actuating component 140 is coupled to a magnetic head component 130 and is suitable for moving the magnetic head component 130 back and forth in a first direction D1 across N tape assemblies 110-1, ..., and 110-N. Specifically, the first actuating mechanism 140 may be used to drive the magnetic head component 130 to move in the first direction D1 across the N magnetic head assemblies. This provides an addressing capability for the magnetic head component 130 in the first direction D1. In this way, in an addressing operation, the magnetic head component 130 may be moved near a tape of a target tape assembly under driving of the first actuating mechanism 130. For example, when a target file or target data stored on a tape of the tape assembly 110-N needs to be read, the first actuating component 140 may drive the magnetic head component 130 to move near and align with the tape of the tape assembly 110-N. Movement of the magnetic head component 130 in the first direction D1 and rolling of the tape in a length direction may be simultaneously performed. Therefore, the movement of the magnetic head in the first direction D1 does not consume additional time. Since the first actuating component 140 provides a moving and addressing capability of the magnetic head in the first direction D1, only a small quantity of magnetic heads may be arranged in the first direction D1. For example, the quantity of magnetic heads is set to be sufficient for performing reading or writing on a tape of a single tape assembly or tapes of a few tape assemblies. In this manner, addressing of tape storage formed by the N tape assemblies can be implemented by using only a small quantity of magnetic heads. This can effectively reduce overall costs of the tape storage apparatus 100.

In some embodiments of this disclosure, the first actuating component 140 may include a first motor 141 and a guide structure 142. The first motor 141 is suitable for driving the magnetic head component 130 to move along the guide structure 142. For example, the magnetic head component 130 is mounted on the guide structure 142 in a movable manner. Therefore, the magnetic head component 130 is moved along the guide structure 142 under driving of the first motor 141 (for example, a linear motor). By using the first motor 141 and the guide structure 142, the magnetic head component 130 can be moved in the first direction D1 across the plurality of tape assemblies in a short period of time and accurately positioned near the tape of the target tape assembly. It may be understood that an implementation of the first actuating component 140 is not limited thereto, and may include another appropriate actuating mechanism.

FIG. 4 is a partial diagram of a tape storage apparatus 100 according to another embodiment of this disclosure. As shown in FIG. 4, a magnetic head component 130 includes a magnetic head array, and the magnetic head array is divided into N subarrays 131-1, ..., and 131-N in a first direction D1. These subarrays 131-1, ..., and 131-N respectively correspond to N tape assemblies 110-1, ..., and 110-N. For example, the magnetic head subarray 131-1 may correspond to the tape assembly 110-1, the magnetic head subarray 131-2 corresponds to the tape assembly 110-2, the magnetic head subarray 131-3 corresponds to the tape assembly 110-3, and the magnetic head subarray 131-N corresponds to the tape assembly 110-N. In this way, a corresponding magnetic head subarray is arranged on each tape assembly. This provides the tape storage apparatus 100 with an addressing capability in the first direction D1 without arrangement of a magnetic head actuating mechanism similar to the first actuating component 140. Further, each of the N subarrays 131-1, ..., and 131-N may include one or more magnetic heads and is adjacent to a part of a tape that is of a corresponding tape assembly and that travels between a first reel 111 and a second reel 112. As an example, in each subarray, only one magnetic head may be arranged, or more magnetic heads may be arranged as needed. For example, when the tape is wide, two or more magnetic heads may be arranged in a width direction of the tape for each magnetic head subarray.

It may be understood that, although FIG. 3 and FIG. 4 show that addressing in the first direction D1 is implemented by using the first actuating component and the magnetic head array respectively, the addressing in the first direction D1 may also be implemented by using a combination of the first actuating component and the magnetic head array. For example, the magnetic head subarrays whose quantity is less than a quantity of tape assemblies may be arranged, and the first actuating component 140 is used to drive these magnetic head subarrays to move in the first direction D1. This can also achieve an objective of this disclosure.

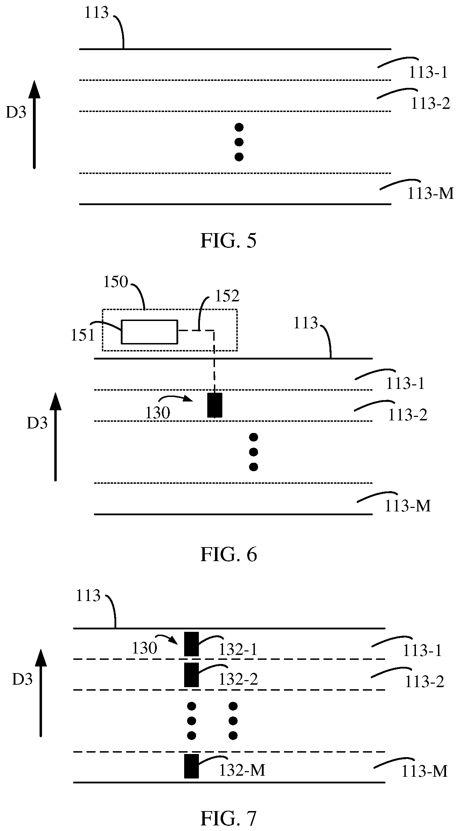

FIG. 5 is a diagram of a single tape 113 of a tape storage apparatus 100 according to an embodiment of this disclosure. FIG. 5 is a view of the tape 113 observed in a direction perpendicular to a surface of the tape. In N tape assemblies 110-1, ..., and 110-N, each tape 113 of all or some of the tape assemblies may include M tape regions 113-1, ..., and 113-M, where M is an integer greater than or equal to 2. Each tape region extends in a length direction of the tape 113, and the M tape regions 113-1, ..., and 113-M are arranged in a third direction D3 parallel to a width direction of the tape 113. The third direction D3 is parallel to the width direction of the tape 113 and intersects a plane on which a first direction D1 and a second direction D2 are located.

Specifically, since the third direction D3 (namely, the width direction of the tape) is a direction intersecting the plane on which the first direction D1 and the second direction D2 are located, a dimension in which the third direction D3 is located is different from a dimension in which the first direction D1 is located and a dimension in which the second direction D2 is located. More tape regions are arranged in the third direction D3 for a tape of at least one tape assembly, an area of the tape can be increased in a new dimension. This helps to further shorten a length of the single tape when a storage capacity remains unchanged. In other words, when the plurality of tape assemblies 113-1, ..., and 113-M are arranged in the first direction D1, a plurality of tape regions are arranged in the third direction D3, so that an area of the tape may be increased in two different dimensions. In this way, the length of the single tape can be shortened to a greater extent when the storage capacity remains unchanged, and addressing duration can be reduced. For example, a width of the tape is increased by five times. If the same storage capacity is maintained, the length of the tape may be shortened to 1/5 of the length of the tape, so that the addressing duration is also accordingly shortened to 1/5 of the addressing duration. Considering that the addressing duration may be shortened to 1/N of the addressing duration at most when the N tape assemblies are arranged in the first direction, after the width of the tape is further increased by M times, the addressing duration of the tape storage apparatus 100 may be finally shortened to 1/(M*N) of the addressing duration of the tape storage apparatus 100 at most. For example, if 10 tape assemblies are arranged and the width of each tape is increased by five times, the addressing duration of the tape storage apparatus 100 with the same storage capacity may be shortened to 1/50 of the addressing duration of the tape storage apparatus 100 in comparison to the conventional tape storage apparatus 100'. In other words, when addressing duration in the conventional solution is 50 seconds, the addressing duration of the tape storage apparatus 100 may be only 1 second. It may be understood that the M tape regions 113-1, ..., and 113-M may be connected to each other to form an integrated tape, but may also be separated from each other in the third direction D3 or some tape regions may be separated from each other to form a plurality of separated tape parts.

In some embodiments of this disclosure, the first direction D1, the second direction D2, and the third direction D3 are perpendicular to each other. Only as an example, the tape storage apparatus 100 has a cuboid housing, where the first direction D1 is parallel to a length direction of the cuboid, the second direction D2 is parallel to a height direction of the cuboid, and the third direction D3 is parallel to a width direction of the cuboid. However, it may be understood that the first direction D1, the second direction D2, and the third direction D3 may alternatively be other directions in space, provided that the three directions are perpendicular to each other. In this manner, the area of the tape can be increased to a maximum extent in the first direction D1 and the third direction D3 that are perpendicular to the length direction of the tape or a rolling direction (namely, the second direction D2) of the tape, and higher space utilization can be obtained inside the storage apparatus, to ensure that a storage density and the storage capacity are large enough.

In some embodiments of this disclosure, a width of each of the M tape regions 113-1, ..., and 113-M is greater than or equal to 12.65 mm. Specifically, in a linear tape open (linear tape open, LTO) data storage technology, a standard width of a tape is 12.65 mm. Since a width of each tape region is at least the standard width, each tape of the tape storage apparatus 100 has a width at least several times the standard width. In this way, the tape storage apparatus 100 can further shorten the length of the tape to 1/M of the length of the tape having the standard width when the storage capacity remains unchanged.

In some embodiments of this disclosure, the tape storage apparatus 100 is an apparatus integrating a magnetic head and a tape. Alternatively, the tape storage apparatus 100 may be a storage apparatus in which a tape may be separated from a magnetic head. However, that the tape storage apparatus 100 is the apparatus integrating the magnetic head and the tape is more preferable and advantageous compared with the storage apparatus in which the magnetic head may be separated from the tape. A reason is that, for the apparatus integrating the magnetic head and the tape, no additional time needs to be spent to obtain the tape and assemble the tape and the magnetic head. Therefore, reduction of the addressing duration and improvement of an access capability can bring more obvious values and benefits to the tape storage apparatus 100. This may enable the tape storage apparatus 100 to be applicable to some storage scenarios that have higher requirements on real-time performance of data.

FIG. 6 is a partial diagram of a tape storage apparatus 100 according to an embodiment of this disclosure. For ease of description, FIG. 6 shows only a single tape 113 and a part of a magnetic head of a magnetic head component 130. As shown in FIG. 6, the tape storage apparatus 100 further includes a second actuating component 150. The second actuating component 150 is coupled to the magnetic head component 130 and suitable for moving the magnetic head component 130 back and forth in a third direction D3 across M tape regions 113-1, ..., and 113-M. Specifically, when a width of the tape is widened, the second actuating component 150 is arranged, so that the magnetic head component 130 may be moved in the third direction D3 or a width direction of the tape, to provide the magnetic head component 130 with an addressing capability in the third direction D3. In this way, for the tape 113 whose width is multiplied, a quantity of magnetic heads does not need to be increased, so that costs of the tape storage apparatus 100 can be reduced. In addition, movement of the magnetic head component 130 in the third direction D3 and rolling of the tape in a length direction may be simultaneously performed. Therefore, movement of the magnetic head in the third direction D3 does not consume additional time.

In some embodiments of this disclosure, the second actuating component 150 includes a second motor 151 and a swing arm structure 152, and the swing arm structure 152 is coupled between the second motor 151 and the magnetic head component 130. As an example, the second motor 151 may be a voice coil motor or a linear motor of another type, and the swing arm structure 152 may be similar to a swing arm in a hard disk drive (hard disk drive, HDD). In addition, the swing arm structure 152 can move between the M tape regions under driving of the motor. In a conventional magnetic head drive apparatus, there may also be a magnetic head drive mechanism that drives the magnetic head to move, but the second actuating component 150 is completely different from the magnetic head drive mechanism. In the conventional solution, the magnetic head drive mechanism usually needs to move the magnetic head only in a small range. Therefore, no swing arm structure is needed. Different from this, the swing arm structure and a motor configured to drive the swing arm structure need to be arranged in the second actuating component 150, so that the magnetic head component 130 can be moved greatly across a plurality of tape regions. By using the second motor 151 and the swing arm structure 152, the magnetic head component 130 can be moved greatly in the third direction D3 across the plurality of tape regions in a short period of time and accurately positioned near a target tape region. It may be understood that an implementation of the second actuating component 150 is not limited thereto, and may include another appropriate actuating mechanism.

FIG. 7 is a partial diagram of a tape storage apparatus 100 according to another embodiment of this disclosure. For ease of description, FIG. 7 shows only a single tape 113 and a part of a magnetic head of a magnetic head component 130. As shown in FIG. 7, the magnetic head component 130 includes a magnetic head array, the magnetic head array is divided into a plurality of subarrays 132-1, ..., and 132-M respectively corresponding to M tape regions 113-1, ..., and 113-M in a third direction D3, and each subarray 132-1, ..., and 132-M includes one or more magnetic heads and is adjacent to a part of a tape that is of a corresponding tape region and that travels between a first reel 111 and a second reel 112. For example, the magnetic head subarray 132-1 may correspond to the tape region 113-1, the magnetic head subarray 132-2 corresponds to the tape region 113-2, and the magnetic head subarray 132-N corresponds to the tape region 113-N. In this way, a corresponding magnetic head subarray is arranged in each tape region. This provides the magnetic head component 130 with an addressing capability in the third direction D3 without arrangement of a second actuating component 150. Further, each of the M subarrays 132-1, ..., and 132-M may include one or more magnetic heads and is adjacent to the part of the tape that is of the corresponding tape assembly and that travels between the first reel 111 and the second reel 112. As an example, in each subarray, only one magnetic head may be arranged, or more magnetic heads may be arranged as needed. For example, when the tape region is wide, two or more magnetic heads may be arranged in a width direction of the tape region for each magnetic head subarray.

It may be understood that, although FIG. 6 and FIG. 7 show that addressing in the third direction D3 is implemented by using the second actuating component and the magnetic head array respectively, the addressing in the third direction D3 may also be implemented by using a combination of the second actuating component and the magnetic head array. For example, the magnetic head subarrays whose quantity is less than a quantity of tape regions may be arranged, and the second actuating component 150 is used to drive these magnetic head subarrays to move in the third direction D3. This can also achieve an objective of this disclosure.

Although not shown in the figure, it may be understood that, when a plurality of tape regions are arranged on tapes of all or a plurality of tape assemblies, these tape assemblies may perform addressing in the third direction D3 in a same manner, that is, implement the addressing in the third direction D3 by using the second actuating component, the magnetic head array, or a combination thereof. Alternatively, some of these tape assemblies perform addressing in the third direction D3 in the same manner, or these tape assemblies perform addressing in the third direction D3 in manners that are different from each other. In addition, an addressing manner (that is, by using a first actuating component 140 or the magnetic head array) of the tape storage apparatus 100 in a first direction D1 and an addressing manner (that is, by using the second actuating component 150 or the magnetic head array) of the tape storage apparatus 100 in the third direction D3 may be randomly combined. This is not limited in this disclosure.

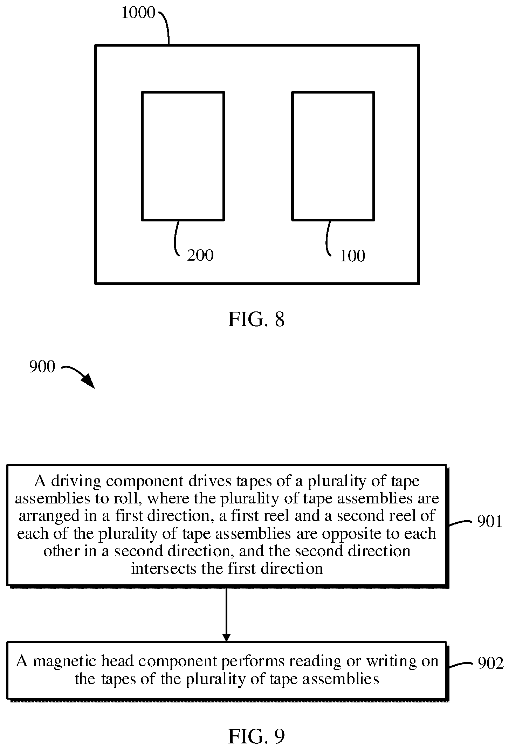

FIG. 8 is a block diagram of a computing system 1000 according to an embodiment of this disclosure. The computing system 1000 may include a tape storage apparatus 100 and a processing unit or processing device 200, to implement functions such as numerical calculation, data processing, and automatic control. Specifically, compared with a conventional tape storage apparatus or tape memory, the tape storage apparatus 100 according to embodiments of this disclosure has shorter addressing duration and random access performance that is close to random access performance of a hard disk. Therefore, the tape storage apparatus 100 may be used as a memory of the computing system 1000, or is applicable to another storage scenario that has a high requirement on real-time performance of data and low latency. In an embodiment, the tape storage apparatus 100 may be used together with a flash memory or a memory of another type, to implement hierarchical storage and replacement of a hard disk at a system level. In addition, when more magnetic heads are arranged, the tape storage apparatus 100 may even have a high bandwidth capability close to a bandwidth capability of the flash memory. Compared with costs of the hard disk, costs of tape storage are extremely low, which are about 1/3 of the costs of the hard disk or less. Therefore, the tape storage apparatus 100 is used as the memory, so that overall costs of the computing system 1000 can be greatly reduced when high storage performance and a high access capability are maintained, to obtain a cost-effective computing system.

The foregoing describes in detail, with reference to FIG. 2 to FIG. 8, the tape storage apparatus 100 and the computing system 1000 including the tape storage apparatus 100 provided in this application. The following describes, with reference to FIG. 9 to FIG. 13, a method provided in this application based on the foregoing tape storage apparatus 100.

FIG. 9 is a schematic flowchart of a method 900 for a tape storage apparatus 100 according to an embodiment of this disclosure. The method 900 may be implemented in the tape storage apparatus 100 in FIG. 2 and FIG. 8, and may be performed, for example, by the tape storage apparatus 100 or a processing device of a computing system 1000. It may be understood that the foregoing aspects described in FIG. 2 to FIG. 8 are applicable to the method 900. For an objective of discussion, the management method 900 is described with reference to FIG. 2 to FIG. 8.

At a block 901, the driving component 120 drives the tapes 113 of the plurality of tape assemblies 110-1, ..., and 110-N to roll. In some embodiments of this disclosure, the driving component 120 uniformly drives the tapes 113 of the plurality of tape assemblies 110-1, ..., and 110-N, or independently drives tapes 113 of some tape assemblies relative to tapes 113 of the other tape assemblies.

At a block 902, the magnetic head component 130 performs reading or writing on the tapes 113 of the plurality of tape assemblies 110-1, ..., and 110-N.

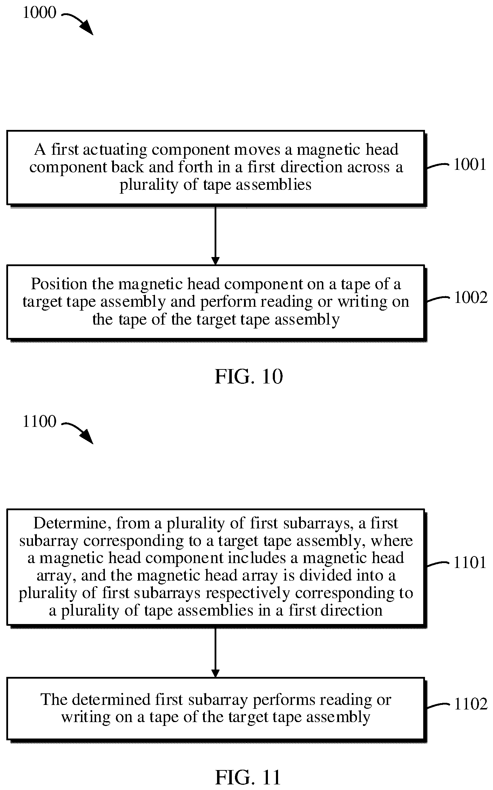

FIG. 10 is a schematic flowchart of a method 1000 for performing reading or writing on tapes 113 of a plurality of tape assemblies 110-1, ..., and 110-N according to some embodiments of this disclosure. The method 1000 may be implemented at the block 902 in FIG. 9.

At a block 1001, the first actuating component 140 moves the magnetic head component 130 back and forth in the first direction D1 across the plurality of tape assemblies 110-1, ..., and 110-N.

At a block 1002, the magnetic head component 130 is positioned on the tape of the target tape assembly and the magnetic head component 130 performs reading or writing on the tape of the target tape assembly. In an addressing operation, the magnetic head component 130 performs data reading or writing on a specified tape region or location, and the target tape assembly is a tape assembly that includes the specified tape region or location in the plurality of tape assemblies.

FIG. 11 is a schematic flowchart of a method 1100 for performing reading or writing on tapes 113 of a plurality of tape assemblies 110-1, ..., and 110-N according to some embodiments of this disclosure. The method 1100 may be implemented at the block 902 in FIG. 9.

At a block 1101, the first subarray corresponding to the target tape assembly is determined from the plurality of first subarrays 131-1, ..., and 131-N.

At a block 1102, the determined first subarray performs reading or writing on the tape of the target tape assembly.

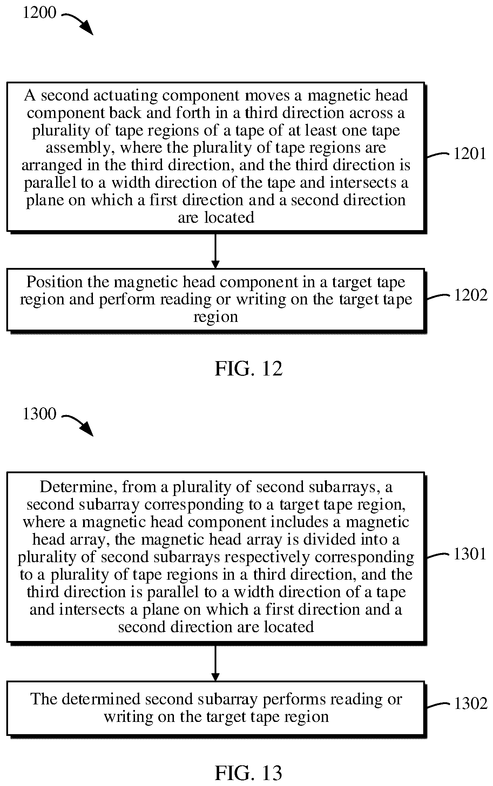

FIG. 12 is a schematic flowchart of a method 1200 for performing reading or writing on tapes 113 of a plurality of tape assemblies 110-1, ..., and 110-N according to some embodiments of this disclosure. The method 1200 may be implemented at the block 902 in FIG. 9.

At a block 1201, the second actuating component 150 moves the magnetic head component 130 back and forth in the third direction D3 across the plurality of tape regions 113-1, ..., and 113-M of the tape of the at least one tape assembly 110-1, ..., and 110-N.

At a block 1202, the magnetic head component 130 is positioned in the target tape region and the magnetic head component 130 performs reading or writing on the target tape region. In an addressing operation, the magnetic head component 130 performs data reading or writing on a specified tape region or location, and the target tape region is a tape region that includes the specified tape region or location in the plurality of tape regions.

FIG. 13 is a schematic flowchart of a method 1300 for performing reading or writing on tapes 113 of a plurality of tape assemblies 110-1, ..., and 110-N according to some embodiments of this disclosure. The method 1300 may be implemented at the block 902 in FIG. 9.

At a block 1301, the second subarray corresponding to the target tape region is determined from the plurality of second subarrays 132-1, ..., and 132-M.

At a block 1302, the determined second subarray performs reading or writing on the target tape region.

Based on the teachings given in the foregoing descriptions and the related accompanying drawings, many modification forms and other implementations of this disclosure provided herein are realized by a person skilled in the art related to this disclosure. Therefore, it needs to be understood that implementations of this disclosure are not limited to the disclosed specific implementations, and the modifications and other implementations are intended to fall within the scope of this disclosure. Further, although the foregoing descriptions and related accompanying drawings describe example implementations in the context of some example combinations of components and/or functions, it should be realized that, different combinations of components and/or functions may be provided by alternative implementations without departing from the scope of this disclosure. In this regard, for example, other combinations of components and/or functions that are different from the combinations of components and/or functions explicitly described above are also expected to fall within the scope of this disclosure. Although specific terms are used herein, the terms are used only in general and descriptive meanings and are not intended to be limiting.

## Claims

1. A tape storage apparatus (100), comprising:
a plurality of tape assemblies (110-1, ..., and 110-N), arranged in a first direction (D1), wherein each of the plurality of tape assemblies (110-1, ..., and 110-N) comprises a first reel (111), a second reel (112), and a tape (113) rolled between the first reel (111) and the second reel (112), the first reel (111) and the second reel (112) are opposite to each other in a second direction (D2), and the second direction (D2) intersects the first direction (D1);
a driving component (120), coupled to the plurality of tape assemblies (110-1, ..., and 110-N) and suitable for driving the tapes (113) of the plurality of tape assemblies (110-1, ..., and 110-N) to roll; and
a magnetic head component (130), suitable for performing reading and writing on the tapes (113) of the plurality of tape assemblies (110-1, ..., and 110-N).

2. The tape storage apparatus (100) according to claim 1, further comprising:
a first actuating component (140), coupled to the magnetic head component (130) and suitable for moving the magnetic head component (130) back and forth in the first direction (D1) across the plurality of tape assemblies (110-1, ..., and 110-N).

3. The tape storage apparatus (100) according to claim 2, wherein the first actuating component (140) comprises a first motor (141) and a guide structure (142), and the first motor (141) is suitable for driving the magnetic head component (130) to move along the guide structure (142).

4. The tape storage apparatus (100) according to claim 1, wherein the magnetic head component (130) comprises a magnetic head array, the magnetic head array is divided into a plurality of first subarrays (131-1, ..., and 131-N) respectively corresponding to the plurality of tape assemblies (110-1, ..., and 110-N) in the first direction (D1), and each of the plurality of first subarrays (131-1, ..., and 131-N) comprises one or more magnetic heads and is adjacent to a part of a tape that is of a corresponding tape assembly (110-1, ..., and 110-N) and that travels between the first reel (111) and the second reel (112).

5. The tape storage apparatus (100) according to claim 1, wherein the tape (113) of each of the plurality of tape assemblies (110-1, ..., and 110-N) in at least one tape assembly (110-1, ..., and 110-N) comprises a plurality of tape regions (113-1, ..., and 113-M) arranged in a third direction (D3), the third direction (D3) is parallel to a width direction of the tape (113) and intersects a plane on which the first direction (D1) and the second direction (D2) are located, and each of the plurality of tape regions (113-1, ..., and 113-M) extends in a length direction of the tape (113).

6. The tape storage apparatus (100) according to claim 5, wherein each of the plurality of tape regions (113-1, ..., and 113-M) has a width greater than or equal to 12.65 mm.

7. The tape storage apparatus (100) according to claim 5, further comprising:
a second actuating component (150), coupled to the magnetic head component (130) and suitable for moving the magnetic head component (130) back and forth in the third direction (D3) across the plurality of tape regions (113-1, ..., and 113-M).

8. The tape storage apparatus (100) according to claim 7, wherein the second actuating component (150) comprises a second motor (151) and a swing arm structure (152), and the swing arm structure (152) is coupled between the second motor (151) and the magnetic head component (130).

9. The tape storage apparatus (100) according to claim 5, wherein the magnetic head component (130) comprises a magnetic head array, the magnetic head array is divided into a plurality of second subarrays (132-1, ..., and 132-M) respectively corresponding to the plurality of tape regions (113-1, ..., and 113-M) in the third direction (D3), and each of the plurality of second subarrays (132-1, ..., and 132-M) comprises one or more magnetic heads and is adjacent to a part of a tape that is of a corresponding tape region (113-1, ..., and 113-M) and that travels between the first reel (111) and the second reel (112).

10. The tape storage apparatus (100) according to claim 5, wherein the first direction (D1), the second direction (D2), and the third direction (D3) are perpendicular to each other.

11. The tape storage apparatus (100) according to claim 1, wherein the magnetic head component (130) is arranged opposite to the tapes (113) of the plurality of tape assemblies (110-1, ..., and 110-N) in the second direction (D2).

12. The tape storage apparatus (100) according to claim 1, wherein the driving component (120) comprises one or more motors and is suitable for uniformly driving the tapes (113) of the plurality of tape assemblies (110-1, ..., and 110-N) or independently driving tapes (113) of some tape assemblies relative to tapes (113) of the other tape assemblies.

13. The tape storage apparatus (100) according to claim 1, wherein the tape storage apparatus (100) is an apparatus integrating a tape and a magnetic head.

14. A computing system, comprising the tape storage apparatus (100) according to any one of claims 1 to 13.

15. A method for a tape storage apparatus, comprising:
driving, by a driving component (120), tapes (113) of a plurality of tape assemblies (110-1, ..., and 110-N) to roll, wherein the plurality of tape assemblies (110-1, ..., and 110-N) are arranged in a first direction (D1), a first reel (111) and a second reel (112) of each of the plurality of tape assemblies (110-1, ..., and 110-N) are opposite to each other in a second direction (D2), and the second direction (D2) intersects the first direction (D1); and
performing, by a magnetic head component (130), reading or writing on the tapes (113) of the plurality of tape assemblies (110-1, ..., and 110-N).

16. The method according to claim 15, wherein the performing, by a magnetic head component (130), reading or writing on the tapes (113) of the plurality of tape assemblies (110-1, ..., and 110-N) comprises:
moving, by a first actuating component (140), the magnetic head component (130) back and forth in the first direction (D1) across the plurality of tape assemblies (110-1, ..., and 110-N); and
positioning the magnetic head component (130) on a tape of a target tape assembly and performing reading or writing on the tape of the target tape assembly.

17. The method according to claim 15, wherein the performing, by a magnetic head component (130), reading or writing on the tapes (113) of the plurality of tape assemblies (110-1, ..., and 110-N) comprises:
determining, from a plurality of first subarrays (131-1, ..., and 131-N), a first subarray corresponding to a target tape assembly, wherein the magnetic head component (130) comprises a magnetic head array, and the magnetic head array is divided into the plurality of first subarrays (131-1, ..., and 131-N) respectively corresponding to the plurality of tape assemblies (110-1, ..., and 110-N) in the first direction (D1); and
performing, by the determined first subarray, reading or writing on the tape of the target tape assembly.

18. The method according to claim 15, wherein the performing, by a magnetic head component (130), reading or writing on the tapes (113) of the plurality of tape assemblies (110-1, ..., and 110-N) comprises:
moving, by a second actuating component (150), the magnetic head component (130) back and forth in a third direction (D3) across a plurality of tape regions (113-1, ..., and 113-M) of a tape of at least one tape assembly (110-1, ..., and 110-N), wherein the plurality of tape regions (113-1, ..., and 113-M) are arranged in the third direction (D3), and the third direction (D3) is parallel to a width direction of the tape (113) and intersects a plane on which the first direction (D1) and the second direction (D2) are located; and
positioning the magnetic head component (130) in a target tape region and performing reading or writing on the target tape region.

19. The method according to claim 15, wherein the performing, by a magnetic head component (130), reading or writing on the tapes (113) of the plurality of tape assemblies (110-1, ..., and 110-N) comprises:
determining, from a plurality of second subarrays (132-1, ..., and 132-M), a second subarray corresponding to a target tape region, wherein the magnetic head component (130) comprises a magnetic head array, the magnetic head array is divided into the plurality of second subarrays (132-1, ..., and 132-M) respectively corresponding to a plurality of tape regions (113-1, ..., and 113-M) in a third direction (D3), and the third direction (D3) is parallel to a width direction of the tape (113) and intersects a plane on which the first direction (D1) and the second direction (D2) are located; and
performing, by the determined second subarray, reading or writing on the target tape region.

20. The method according to claim 15, wherein the driving, by a driving component (120), tapes (113) of a plurality of tape assemblies (110-1, ..., and 110-N) to roll comprises:
uniformly driving, by the driving component (120), the tapes (113) of the plurality of tape assemblies (110-1, ..., and 110-N), or independently driving, by the driving component (120), tapes (113) of some tape assemblies relative to tapes (113) of the other tape assemblies.
